# FASCICULE DE BREVET EUROPEEN

(11) **EP 0 497 708 B1**
(45) Date de publication et mention de la délivrance du brevet: **11.01.1995**
(21) Numéro de dépôt: 92400262.9
(22) Date de dépôt: 31.01.1992
(51) Int. Cl.: F16F 13/00

(54) **Perfectionnements aux dispositifs antivibratoires hydrauliques**
Verbesserungen an hydraulischen Antischwingungsvorrichtungen
Improvements of hydraulic antivibration devices

(30) Priorité: 01.02.1991 FR 9101166
(43) Date de publication de la demande: 05.08.1992
(73) Titulaire: HUTCHINSON, F-75008 Paris (FR)
(72) Inventeur: Bretaudeau, Jean-Pierre, F-28200 Chateaudun (FR)
(74) Mandataire: Behaghel, Pierre

(56) Documents cités:
- EP-A- 0 042 909
- EP-A- 0 072 262
- DE-A- 3 325 805
- US-A- 4 651 980
- PATENT ABSTRACTS OF JAPAN vol. 10, no. 307 (M-527)(2363) 18 Octobre 1986 & JP-A-61119831 (KINUGAWA RUBBER) 7 Juin 1986

## Description

L'invention est relative aux dispositifs antivibratoires hydrauliques destinés à ètre interposés aux fins d'amortissement et de liaison, voire de support, entre deux éléments rigides tels qu'un châssis de véhicule et que le moteur de ce véhicule.

Elle concerne plus particulièrement, parmi ces dispositifs, ceux qui comportent :
- deux armatures rigides solidarisables respectivement avec les deux éléments rigides à réunir,
- une structure en élastomère reliant entre elles les deux armatures et formant au moins en partie avec celles-ci deux chambres déformables étanches,
- un passage étranglé faisant communiquer en permanence les deux chambres entre elles,
- une masse de liquide remplissant les deux chambres et le passage étranglé,
- une membrane déformable constituée essentiellement en un matériau déformable, membrane dont le pourtour est fixé de façon étanche sur le bord rigide d'un orifice reliant l'une des deux chambres ci-dessus, ou "première chambre", à une troisième chambre déformable constituée notamment par la "seconde" des deux chambres ci-dessus ou par l'atmosphère,
- des moyens pour limiter l'amplitude des déformations de la membrane à une faible valeur, généralement de l'ordre du mm, moyens constitués de préférence par une toile peu extensible noyée dans ladite membrane.
- et cette membrane comprenant sur l'une au moins de ses deux faces un cratère central.

Comme on le sait, avec un tel dispositif,
- les oscillations de relativement grande amplitude et relativement basse fréquence telles que celles dues au "hachis" engendré sur le véhicule par les cahots de la route ont pour effet de refouler le liquide de l'une des deux premières chambres dans l'autre et inversement à travers le passage étranglé, avec mise en résonance de la masse liquide ainsi refoulée lorsque la fréquence desdites oscillations atteint une valeur prédéterminée qui est fonction du rapport entre la longueur axiale et la section droite du passage étranglé, cette mise en résonance assurant un excellent amortissement des oscillations concernées,
- les vibrations de relativement petite amplitude et relativement haute fréquence, telles que celles dues au fonctionnement du moteur, se traduisent par des vibrations de la membrane susceptibles d' atténuer la transmission des vibrations en cause.

Pour cette raison, ladite membrane est souvent appelée membrane de "découplage en amplitude".

Dans les réalisations connues des dispositifs antivibratoires du genre ci-dessus, la membrane est en général constituée par un disque en caoutchouc délimité au moins sur sa plus grande partie, comprenant sa zone centrale, par deux faces planes parallèles.

L'expérience montre que, avec une telle géométrie de la membrane, les oscillations ou vibrations de celle-ci se traduisent par certaines discontinuités de la déformation se produisant en général, au cours de chaque cycle, très peu de temps après l'une des deux inversions de la déformation, discontinuités génératrices de claquements ou autres bruits désagréables.

Pour remédier à cet inconvénient, il a déjà été proposé de faire comprendre à l'une au moins des faces de la membrane un cratère central.

Mais dans les modes de réalisation proposés de cette caractéristique (document DE-A-3 325 805), le profil du cratère est arrondi et le silence obtenu n'est pas total.

L'invention a pour but, surtout, de supprimer totalement l'inconvénient signalé.

A cet effet les membranes du genre en question selon l'invention sont essentiellement caractérisées en ce que leur cratère central présente une forme conique et est entouré d'au moins une nervure annulaire dont la crête est une arête plane le long de laquelle se raccordent deux surfaces tronconiques, et en ce que la membrane comprend en outre, sur l'une au moins de ses deux faces, au moins une gorge annulaire dont le fond est défini par une courbe fermée plane le long de laquelle se raccordent deux surfaces tronconiques.

Dans des modes de réalisation avantageux, on a recours en outre à l'une et/ou à l'autre des dispositions suivantes :
- les zones centrales des deux faces de la membrane sont conformées en cratères, de sorte que la membrane est fortement amincie en son centre,
- la membrane comprend au moins une nervure annulaire sur chacune de ses deux faces et les diamètres des crêtes des nervures correspondant respectivement aux deux faces de la membrane sont différentes,
- l'une des deux faces d'une membrane selon l'alinéa précédent comprend une nervure circulaire dont la crête s'étend selon un cercle de diamètre D₁ et son autre face comprend une nervure circulaire dont la crête s'étend selon un cercle de diamètre D₃ inférieur à D₁, nervure entourée par une rainure circulaire dont le fond s'étend selon un cercle de diamètre D₄ supérieur à D₁,
- le bord extérieur de la membrane chevauche jointivement le rebord intérieur rigide de l'orifice séparant la première chambre de la troisième,
- une rondelle rigide est adhérée sur une plage, de la périphérie de la membrane, librement exposée dans la première chambre,
- la rondelle rigide présente en demi-coupe axiale la forme d'un L.

L'invention comprend, mises à part ces dispositions principales, certaines autres dispositions qui s'utilisent de préférence en même temps et dont il sera plus explicitement question ci-après.

Dans ce qui suit, l'on va décrire quelques modes de réalisation préférés de l'invention en se référant au dessin ci-annexé d'une manière bien entendu non limitative.

La figure 1, de ce dessin, montre en coupe axiale un support antivibratoire hydraulique établi selon l'invention.

Les figures 2 et 3 montrent, respectivement selon les flèches II et III de la figure 1, la membrane comprise par ce dispositif.

La figure 4 montre en demi-coupe axiale à échelle agrandie une variante de ladite membrane.

D'une façon connue en soi, le support considéré, qui présente d'une façon générale une symétrie de révolution autour d'un axe vertical X, comprend :
- une embase rigide 1 constituée par un plot central 1₁ prolongé vers le haut par un goujon 1₂ en attente,
- un anneau rigide 2 constitué par deux plaquettes annulaires soudées l'une contre l'autre, chacune de ces plaquettes étant délimitée intérieurement par un bord rabattu 2₁ et étant prolongée vers l'extérieur par deux pattes 2₂ elles-mêmes perforées par des trous de fixation 2₃,
- une paroi tronconique épaisse en caoutchouc 3 présentant une bonne résistance à la compression axiale de façon à jouer un rôle de "support" et reliant de façon étanche l'embase 1 à l'anneau 2,
- un soufflet mince et flexible 4 relié de façon étanche à l'anneau 2 et délimitant un boîtier fermé avec cet anneau, la paroi 3 et l'embase 1,
- un capot rigide 5 de protection du soufflet dont le pourtour est fixé sur l'anneau 2 et dont la paroi est ajourée en 5₁,
- une cloison rigide intermédiaire 6 divisant le boîtier en deux chambres, savoir une chambre de travail A du côté de la paroi 3 et une chambre de compensation B du côté du soufflet 4,
- un passage étranglé 7 reliant les deux chambres A et B entre elles, passage de préférence évidé dans le pourtour rigide de la cloison intermédiaire 6, laquelle cloison est évidée par un trou central 6₁ propre à faire communiquer entre elles les deux dites chambres,
- une masse de liquide L remplissant les deux chambres et le passage étranglé,
- une membrane étanche et déformable 8 constituée en un matériau élastomère ou en matière plastique dont le bord est fixé de façon étanche contre le bord du trou 6₁,
- et une toile 9 résistante à la traction noyée dans la membrane 8 et propre à limiter l'amplitude des débattements axiaux au centre de cette membrane à une faible valeur, généralement de l'ordre du mm.

L'ensemble des plages périphériques du soufflet flexible 4, du capot 5 et de la cloison intermédiaire 6 sont serties l'une contre l'autre par rabattement du rebord 2₁ compris par l'une des deux plaquettes constitutives de l'anneau 2 contre l'autre plaquette, le rebord 2₁ de cette autre plaquette étant, quant à lui, noyé dans la grande base de la paroi tronconique épaisse 3.

L'invention concerne plus particulièrement la membrane 8.

Au lieu de délimiter cette membrane par deux faces planes, comme dans les réalisations connues, on fait comprendre à l'une au moins d'entre elles un cratère central entouré par au moins une nervure annulaire de façon telle que, de préférence, l'épaisseur de la membrane varie constamment le long de chaque rayon de celle-ci.

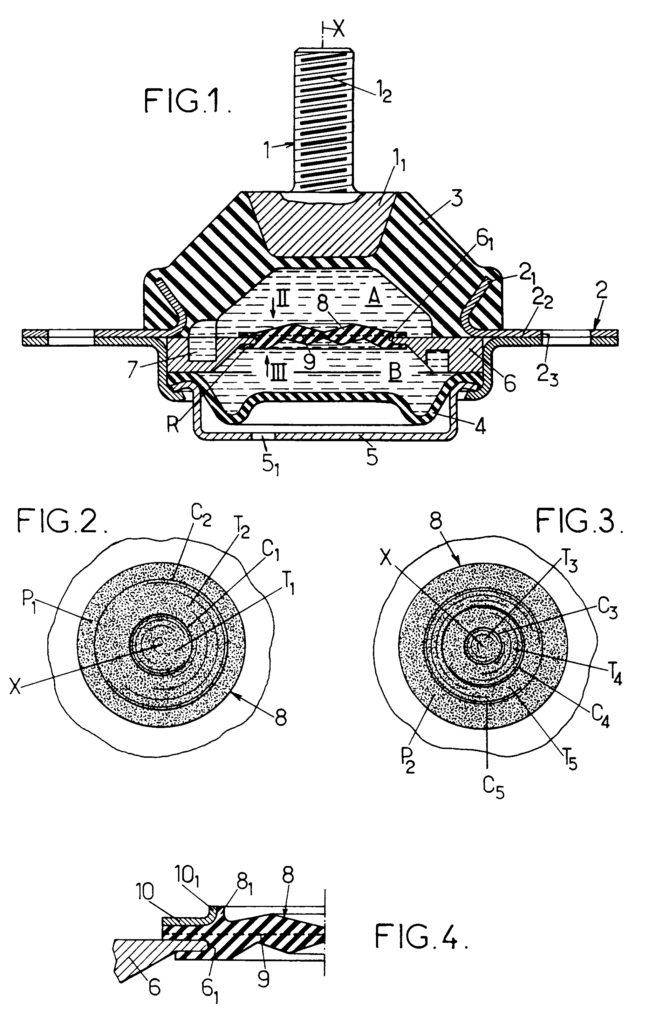

Dans le mode de réalisation illustré sur les figures 1 à 3, les deux faces comprennent des nervures et/ou gorges concentriques dont les sections et diamètres diffèrent pour les deux faces.

Plus précisément :
- la face, de la membrane 8, tournée vers la chambre A, comprend un cratère conique central T₁ d'axe X et la crête C₁ de ce cratère est prolongée extérieurement par une face tronconique T₂ délimitant avec ledit cratère T₁ une nervure annulaire de section droite triangulaire ; la grande base extérieure C₂ de ladite face tronconique T₂ est prolongée vers l'extérieur par une plage périphérique plane P₁,
- la face, de la membrane 8, tournée vers la chambre B, comprend un cratère conique central T₃ d'axe X dont la crête circulaire C₃ présente un diamètre D₃ inférieur au diamètre D₁ de la crête C₁ ci-dessus ; cette crête C₃ est prolongée extérieurement par une gorge annulaire comprenant successivement une face tronconique T₄ raccordée, le long d'un fond circulaire C₄ dont le diamètre D₄ est légèrement supérieur à D₁, à une face tronconique T₅ et la crête C₅ de cette dernière face est prolongée vers l'extérieur par une plage périphérique plane P₂.

Les plages périphériques planes P₁ et P₂ délimitent axialement un anneau de bordure R de la membrane 8, anneau qui est évidé radialement depuis l'extérieur par une fente annulaire propre à chevaucher jointivement le bord rigide du trou 6₁ en étant fermement adhéré de façon étanche contre ce bord.

D'une façon générale, on peut considérer que les sections axiales des deux faces de la membrane se présentant sous la forme de lignes brisées qui sont chacune symétriques par rapport à l'axe X mais qui ne sont en général ni identiques entre elles ni même symétriques l'une de l'autre par rapport à un plan transversal.

On pourrait prévoir sur l'une au moins des deux faces, autour d'un cratère central, plusieurs gorges annulaires concentriques délimitant entre elles des nervures annulaires présentant de préférence une section triangulaire.

Les crêtes de ces nervures, tout comme les fonds des gorges en question, ne présentent pas obligatoirement un profil à angle vif : ce profil pourrait parfaitement être arrondi.

Ce qui importe, c'est que les creux réservés entre les différentes surépaisseurs soient relativement profonds sans mettre en péril la résistance mécanique de la membrane.

L'expérience montre qu'avec une membrane conformée de la manière décrite ci-dessus, les déformations de cette membrane correspondant aux oscillations ou vibrations de celle-ci sont effectuées sans discontinuité ou distorsion, en particulier lors des inversions de ces déformations, ce qui supprime les claquements ou autres bruits désagréables qui étaient observés avec les membranes délimitées par deux faces planes parallèles.

En suite de quoi, et quel que soit le mode de réalisation adopté, on dispose finalement d'un support hydraulique antivibratoire dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment:
- celles où l'une des deux faces de la membrane serait plane,
- celles où chaque nervure annulaire considérée présenterait un contour fermé non circulaire, notamment ovale ou elliptique,
- celles où la membrane serait placée, non pas sur la cloison intermédiaire 6, mais en un autre emplacement de la face interne de la chambre de travail A, et en particulier au voisinage de l'embase 1, cette membrane obturant alors un trou propre à faire communiquer la chambre A avec l'atmosphère ou avec une troisième chambre (non représentée) également déformable, étanche et remplie de liquide, chambre délimitée à cet effet par une nouvelle membrane flexible étanche dont la face extérieure à la chambre considérée délimiterait une chambre à air éventuellement garnie d'une mousse ou serait mise à l'air libre,
- celles où le dispositif antivibratoire considéré serait un manchon travaillant essentiellement selon une direction diamétrale et pour lequel les deux armatures rigides seraient tubulaires, s'entourant l'une l'autre, et de préférence de révolution et coaxiales au moins sous charge,
- celles où le passage étranglé serait évidé dans d'autres portions du dispositif que le pourtour de la cloison intermédiaire, et notamment à travers la zone centrale de la membrane elle-même,
- et celles où une plage, de la périphérie de la membrane, directement exposée au liquide contenu dans la poche A, serait revêtue par une rondelle rigide 10 (figure 4) adhérée sur elle et libre de ses mouvements dans ledit liquide : la présence d'une telle rondelle "flottante" 10, qui est avantageusement prolongée intérieurement par un rebord 10₁ rabattu axialement dans le sens s'écartant de la membrane, comme visible sur la figure 4, rebord qui est lui-même longé jointivement par une lèvre annulaire 8₁ venue de moulage avec la membrane 8, permet de réduire encore les phénomènes acoustiques indésirables dus aux claquements et autres bruits ayant pour source les déformations de ladite membrane, ainsi qu'il a été exposé dans le brevet FRANCE n° 2 522 759 de la demanderesse.

## Revendications

1. Dispositif antivibratoire hydraulique destiné à être interposé entre deux éléments rigides, comportant deux armatures rigides (1,2) solidarisables respectivement avec les deux éléments rigides à réunir, une structure en élastomère (3) reliant entre elles les deux armatures et formant au moins en partie avec celles-ci deux chambres déformables étanches (A,B), un passage étranglé (7) faisant communiquer en permanence les deux chambres entre elles, une masse de liquide remplissant les deux chambres et le passage étranglé, une membrane déformable (8) constituée essentiellement en un matériau déformable et dont le pourtour est fixé de façon étanche sur le bord rigide d'un orifice (6₁) reliant l'une (A) des deux chambres (A,B) ci-dessus, ou "première chambre", à une troisième chambre déformable constituée notamment par la "seconde" (B) des deux chambres ci-dessus ou par l'atmosphère, et des moyens pour limiter l'amplitude des déformations de la membrane à une faible valeur, généralement de l'ordre du mm, cette membrane comprenant sur l'une au moins de ses deux faces un cratère central, caractérisée en ce que ledit cratère central (T₁;T₃) présente une forme conique et est entouré d'au moins une nervure annulaire dont la crête (C₁ ; C₃,) est une arête plane le long de laquelle se raccordent deux surfaces tronconiques (T₂ ; T₄ ;), et en ce que la membrane (8) comprend en outre, sur l'une au moins de ses deux faces, au moins une gorge annulaire dont le fond (C₄) est défini par une courbe fermée plane le long de laquelle se raccordent deux surfaces tronconiques (T₄,T₅).

2. Dispositif antivibratoire selon la revendication 1, caractérisé en ce que les zones centrales des deux faces de la membrane sont conformées en cratères (T₁,T₃), de sorte que la membrane est fortement amincie en son centre.

3. Dispositif antivibratoire selon l'une quelconque des précédentes revendications, caractérisé en ce que la membrane comprend au moins une nervure annulaire sur chacune de ses deux faces et en ce que les diamètres des crêtes des nervures correspondant respectivement aux deux faces de la membrane sont différents.

4. Dispositif antivibratoire selon la revendication 3, caractérisé en ce que l'une des faces de la membrane comprend une nervure circulaire dont la crête (C₁) s'étend selon un cercle de diamètre D₁ et en ce que son autre face comprend une nervure circulaire dont la crête (C₃) s'étend selon un cercle de diamètre D₃ inférieur à D₁, nervure entourée par une rainure circulaire dont le fond (C₄) s'étend selon un cercle de diamètre D₄ supérieur à D₁.

5. Dispositif antivibratoire selon l'une quelconque des précédentes revendications, caractérisé en ce que le bord extérieur (R) de la membrane chevauche jointivement le rebord intérieur rigide de l'orifice (6₁) séparant la première chambre de la troisième.

6. Dispositif antivibratoire selon l'une quelconque des précédentes revendications, caractérisé en ce qu'une rondelle rigide (10) est adhérée sur une plage, de la périphérie de la membrane, librement exposée dans la première chambre (A).

7. Dispositif antivibratoire selon la revendication 6, caractérisé en ce que la rondelle rigide (10) présente en demi-coupe axiale la forme d'un L.

## Claims

1. Hydraulic vibration-damping device intended to be interposed between two rigid elements, including two rigid members (1, 2) which can be fixed respectively to the two rigid elements to be connected, an elastomer structure (3) connecting together the two members and forming, at least partly with these, two sealed deformable chambers (A, B), a throttled passage (7) putting the two chambers permanently in communication with each other, a mass of liquid filling the two chambers and the throttled passage, a deformable membrane (8) formed essentially from a deformable material and the periphery of which is fixed sealingly to the rigid rim of an orifice (6₁) connecting one (A) of the above two chambers (A, B), or "first chamber", to a third deformable chamber formed notably by the "second" (B) of the above two chambers or by the atmosphere, and means for limiting the magnitude of the deformations of the membrane to a low value, generally around 1 mm, this membrane comprising, on at least one of its two faces, a central crater, characterised in that the said central crater (T₁; T₃) has a conical shape and is surrounded by at least one annular rib, the crest (C₁; C₃) of which is a flat ridge along which two frustoconical surfaces (T₂; T₄) are connected, and in that the membrane (8) also comprises, on at least one of its two faces, at least one annular groove, the bottom (C₄) of which is defined by a plane closed curve along which two frustoconical surfaces (T₄, T₅) are connected.

2. Vibration-damping device according to Claim 1, characterised in that the central regions of the two faces of the membrane are shaped as craters (T₁, T₃), so that the membrane is much thinner at its centre.

3. Vibration-damping device according to either one of the preceding claims, characterised in that the membrane comprises at least one annular rib on each of its two faces and in that the diameters of the crests of the ribs corresponding respectively to the two faces of the membrane are different.

4. Vibration-damping device according to Claim 3, characterised in that one of the faces of the membrane comprises a circular rib, the crest (C₁) of which extends in a circle of diameter D₁ and in that its other face comprises a circular rib, the crest (C₃) of which extends in a circle of diameter D₃, less than D₁, the said rib being surrounded by a circular recess, the bottom (C₄) of which extends in a circle of diameter D₄, greater than D₁.

5. Vibration-damping device according to any one of the preceding claims, characterised in that the outer rim (R) of the membrane straddles contiguously the rigid inner edge of the orifice (6₁) separating the first chamber from the third.

6. Vibration-damping device according to any one of the preceding claims, characterised in that a rigid washer (10) is bonded to an area of the periphery of the membrane which is freely exposed in the first chamber (A).

7. Vibration-damping device according to Claim 6, characterised in that the rigid washer (10) has, in axial half-section, the shape of an L.

## Patentansprüche

1. Hydraulische Antischwingungsvorrichtung für den Einbau zwischen zwei starren Elementen, bestehend aus folgenden Teilen: zwei starren Armaturen (1, 2), die an jeweils einem der beiden starren, miteinander zu verbindenden Elemente anbringbar sind, einer Struktur (3) aus elastomerem Material, die die beiden Armaturen miteinander verbindet und wenigstens teilweise mit diesen zwei deformierbare, dichte Kammern (A, B) bildet, einem verengtem Durchgang (7), der die beiden Kammern dauernd miteinander verbindet, einer flüssigen Masse, die die beiden Kammern und den verengten Durchgang ausfüllt, einer deformierbaren Membran (8), die im wesentlichen aus einem verformbaren Material besteht und deren Umfang dicht an dem starren Rand einer Öffnung (6₁) befestigt ist, die die eine Kammer (A) oder "erste Kammer" der beiden oben erwähnten Kammern (A, B) mit einer dritten verformbaren Kammer verbindet, die insbesondere durch die "zweite" Kammer (B) der beiden oben erwähnten Kammern oder die Atmosphäre gebildet wird und Einrichtungen, um die Amplitude der Deformationen der Membran auf einen geringen Wert zu begrenzen, der im allgemeinen in der Größenordnung von ein Milimeter liegt, wobei die Membran auf wenigstens einer ihrer beiden Oberflächen eine mittlere Einbuchtung enthält, dadurch gekennzeichnet, daß die mittlere Einbuchtung (T₁ ; T₃) eine konische Form hat und von wenigstens einer ringförmigen Rippe umgeben ist, deren Kamm (C1; C₃) einen ebenen Grat bildet, längs dem sich zwei konische Oberflächen (T₂; T₄) anschließen, und daß die Membran (8) darüber hinaus auf wenigstens einer ihrer beiden Oberflächen wenigstens eine ringförmige Rinne aufweist, deren Boden (C₄) eine geschlossene, ebene Kurve bildet, längs der sich zwei konische Oberflächen (T₄; T₅) anschließen.

2. Antischwingungsvorrichtung nach Anspruch 1, dadurch gekennzeichnet, daß die mittleren Zonen der beiden Oberflächen der Membran derart als Krater (T₁; T₃) ausgebildet sind, daß die Membran in ihrem mittleren Bereich stark verdünnt ist.

3. Antischwingungsvorrichtung nach einem der vorhergehenden Ansprüche, dadurch gekennzeichnet, daß die Membran auf beiden Oberflächen wenigstens eine ringförmige Rippe enthält, und daß die Durchmesser der Kämme der Rippen auf jeweils einer der beiden Oberflächen der Membran verschieden sind.

4. Antischwingungsvorrichtung nach Anspruch 3, dadurch gekennzeichnet, daß eine der Oberflächen der Membran eine kreisförmige Rippe enthält, deren Kamm (C₁) sich gemäß einem Kreis mit dem Durchmesser D₁ erstreckt, und daß ihre andere Oberfläche eine kreisförmige Rippe enthält, deren Kamm (C₃) sich längs eines Kreises mit dem Durchmesser D₃ erstreckt, der kleiner ist als D₁ wobei die Rippe von einer kreisförmigen Rinne umgeben ist, deren Boden (C₄) sich längs eines Kreises mit dem Durchmesser D₄ erstreckt, der größer als D₁ ist.

5. Antischwingungsvorrichtung nach einem der vorhergehenden Ansprüche, dadurch gekennzeichnet, daß der äußere Rand (R) der Membran die innere starre Randleiste der Öffnung (6₁), die die erste Kammer von der dritten Kammer trennt, dicht abdeckt.

6. Antischwingungsvorrichtung nach einem der vorhergehenden Ansprüche, dadurch gekennzeichnet, daß an einem Bereich des Umfanges der Membran, der frei in die erste Kammer (A) vorsteht, eine starre Scheibe (10) angebracht ist.

7. Antischwingungsvorrichtung nach Anspruch 6, dadurch gekennzeichnet, daß die starre Scheibe (10) im axialen Halbschnitt die Form eines L hat.
